# EUROPÄISCHE PATENTSCHRIFT

(11) **EP 0 763 732 B1**
(45) Veröffentlichungstag und Bekanntmachung des Hinweises auf die Patenterteilung: **11.06.2008**
(21) Anmeldenummer: 96810575.9
(22) Anmeldetag: 03.09.1996
(51) Int. Cl.: G01N 29/04

(54) **Anordnung für die akustische Materialprüfung von Formteilen**
Device for the acoustic material inspection of molded articles
Dispositif pour l'inspection acoustique d'articles moulés

(30) Priorität: 15.09.1995 CH 260295
(43) Veröffentlichungstag der Anmeldung: 19.03.1997
(73) Patentinhaber: Kistler Holding AG, 8408 Winterthur (CH)
(72) Erfinder: Reichau, Ralf, 13507 Berlin (DE); Cavalloni, Claudio, Dr., 8105 Regensdorf (CH); Kirchheim, Andreas, Dr., 8442 Hettlingen (CH); Wolfer, Peter, 8451 Kleinandelfingen (CH)

(56) Entgegenhaltungen:
- AT-B- 379 898
- DE-U- 9 316 822
- GB-A- 2 262 604
- US-A- 3 935 484
- US-A- 4 519 245
- US-A- 5 242 512

## Beschreibung

Die Erfindung betrifft eine Anordnung für Materialprüfung von Formteilen gemäss Oberbegriff von Anspruch 1.

In der Fertigungstechnik von Formteilen, z.B. Blech- oder Kunststoffteilen, besteht häufig das Problem direkt nach dem Fertigungsprozess innerhalb kurzer Zeit, beispielsweise in einer Fertigungsstrasse während der kurzen Zeit zwischen zwei Bearbeitungsstationen, Formteile fehlerhafter Zusammensetzung - oder solche, die bei einer Umformung eine Beschädigung erlitten haben - zu erkennen und aus dem weiteren Produktionsprozess auszuscheiden.

Es ist bekannt, dass "gute" und fehlerhafte Formteile in ihrem dynamischen Verhalten gegenüber akustischen Schwingungen, beispielsweise in ihrer Steifigkeit und in ihrem Dämpfungsverhalten, Unterschiede aufweisen. Darauf basierend ist vorgeschlagen worden (EP-Anmeldung 951166396 vom 23.10.1995), ein derartiges unterschiedliches Verhalten durch Messung der von einem Schwingungserzeuger angeregten, in das Formteil hineinfliessenden, akustischen Schwingungen zu ermitteln und danach eine Sortierung der Formteile vorzunehmen. Bei der Durchführung eines solchen Verfahrens wird beispielsweise das akustische Schwingungsspektrum eines "guten", d.h. fehlerfreien oder nur mit Fehlern innerhalb eines Toleranzbereiches behafteten, Formteils als Referenzspektrum benutzt, mit dem die Spektren der anderen Formteile verglichen werden. Über die Toleranzgrenze hinaus gehende Abweichungen in den Spektren der Prüflinge werden zum Ausscheiden des entsprechenden Prüflings benutzt.

Aus der US 4479386 ist ein Verfahren bekannt, welches mittels Hammerschlagmessung auf Verbundteilen die Güte der Verbindung ermittelt, indem die Spektren der Einschlagskraft mit denen einer Sollkurve eines Gutteiles verglichen werden. Nachteilig an dieser Anordnung ist die schlechte Reproduzierbarkeit des Hammerschlags.

Die US 4519245 beschreibt ein Verfahren wie in der US 4479386, wobei die Schlagwirkung durch eine Apparatur ausgelöst wird, welche einen Schlag mit reproduzierbarer Magnitude auslöst. Hier lässt sich aber das Spektrum der einwirkenden Kraft auch nicht beeinflussen.

Die DE 2934928 beschreibt ein Verfahren zur Dauerüberwachung eines Prüfteils, wobei ein Erregerelement eine vordefinierte akustische Schwingung an einem Ende des Prüfteils erzeugt und ein Fühlerelement an einem anderen Ende des Prüfteils die angekommene Schwingung aufnimmt und mit einer entsprechenden Schwingung früherer Zeiten vergleicht. Mit dieser Apparatur lassen sich aber nicht Materialeigenschaften an einem vorgegebenen Punkt messen, da Sender und Empfänger an verschiedenen Orten angebracht sind.

Aufgabe der Erfindung ist es, für das geschilderte Prüfverfahren eine geeignete Anordnung zur Verfügung zu stellen, wobei besonders darauf zu achten ist, dass sowohl die Anregung des Schwingungserzeugers in Form und Amplitude als auch seine akustische Ankopplung für Referenzteil und Prüfling gleich und konstant sind. Denn nur bei konstanter Anregung und Ankopplung ergeben die gemessenen und aufgezeichneten Spektren eine eindeutige und einwandfreie Aussage über den Materialzustand der Prüflinge, bzw. Formteile.

Gelöst wird diese Aufgabe durch die Merkmale von Anspruch 1.

Eine Aktuator/Sensoranordnung auf piezoelektrischer/elektromechanischer Basis, wie sie beispielsweise an sich bei Stossdämpfern im Fahrzeugbau für eine aktive Fahrwerksregelung (Akira FUKAMI et al., Development of Piezo-Electric Actuators and Sensors for Electronically Controlled Suspension, JSAE Review, Jap. Soc. Of Automotive Engineers, Vol 12, No 3 (1991), pp 48-52), bekannt ist, eignet sich in Verbindung mit einem Koppelelement für das geschilderte Prüfverfahren als kompakte und robuste Anregungs- und Messanordnung, deren Messignale in dem Signalanalysator auf einfache Weise analysiert und einer weiteren Verwendung zugeführt werden können.

Durch die Mittel zur Erfassung der Signale des Generators, der als Anregungssignale für den Aktuator entweder Einzelimpulse oder über einen gewissen Frequenzbereich variable Schwingungen, z.B. Sinusschwingungen, konstanter Form und Amplitude erzeugt, wird eine für alle Formteile gleiche und konstante Anregung gewährleistet. Diese Erfassung kann beispielsweise in einem Programm für die Ausgabe einzelner Spannungsimpulse mit einer bestimmten Amplitude für jede Frequenz bestehen. Diese Mittel können auch darin bestehen, die Anregung des Aktuators zu messen und entsprechend zu korrigieren oder gegebenenfalls in einem Regelkreis in Form und Amplitude auf einem konstanten Wert zu halten.

Eine konstante Ankopplung lässt sich beispielsweise durch eine Federkraft,einen hydraulischen oder pneumatischen Anpressdruck oder Roboterarmes erreichen. Wichtig ist es jedoch, dass Mittel vorgesehen sind, die die Anregung des Aktuators erst nach Überschreiten eines einstellbaren Schwellenwertes für die Anpresskraft der Montageeinheit an das Formteil auslösen, wobei die Ermittlung dieses Schwellenwertes durch den Sensor erfolgt. Durch diese Mittel erhält man eine Kontrolle über die Ankopplung und damit eine erhöhte Sicherheit für ihre und eine vergrösserte Genauigkeit bei ihrer Konstanz.

Weiterhin hat es sich als zweckmässig erwiesen, Aktuator und Sensor mechanisch in Serie anzuordnen, obwohl eine Parallelanordnung beider ebenfalls möglich ist. Die Serienanordnung bringt jedoch den Vorteil, dass für beide die selben Ankopplungsbedingungen gegeben sind. Es ist dabei von untergeordneter Bedeutung, ob bei koaxialer Anordnung der Sensor oder der Aktuator näher zum Formteil plaziert ist.

Da an Sensor und Aktuator unterschiedliche Anforderungen - z.B. wird vom Aktuator bei Anregung ein relativ langer Weg gefordert - gestellt werden, ist es vorteilhaft, wenn Sensor und Aktuator voneinander verschiedene Vorspannkräfte aufweisen, wobei ein separat vorgespannter Sensor zusätzlich von der Vorspannkraft für den Aktuator beaufschlagt sein kann.

Als Sensoren haben sich Kraftsensoren besonders bewährt; die Anwendung von anderen Sensoren, wie Beschleunigungs- oder Schallemissions-Sensoren ist jedoch auch möglich.

Kräftige Anregungsamplituden, d.h. grosse Schwingungswege des Aktuators, und relativ grosse Sensorsignale lassen sich erreichen, wenn Aktuator und Sensor aus Piezokeramikscheiben bestehen, wobei die Anregung zusätzlich erhöht werden kann, wenn der Aktuator ein Stapelelement aus einer Vielzahl von Piezokeramikscheiben ist. Durch Anwendung der Mehrschicht-Technologie können solche Stapelelemente mit hohen Stellwegen bei relativ niedrigen Spannungen hergestellt werden.

Wird jedoch eine hohe Genauigkeit bei einer Schwellenwertbestimmung, beispielsweise für die Auslösung der Aktuatoranregung erst nach dem Erreichen einer bestimmten Anpresskraft, verlangt, so kann der Sensor mit Vorteil aus Quarzscheiben bestehen. Werden hohe Genauigkeit und relativ kräftige Signale verlangt, so wählt man zweckmässig einen Sensor aus Piezokeramik- und Quarzscheiben.

Mechanisch einfach wird der Aufbau der Aktuator/Sensoranordnung, wenn die Aktuator- und die Sensorscheiben als Ringscheiben ausgebildet sind, die unter konstanter mechanischer Vorspannung in einem Gehäuse montiert werden können.

Eine Ankopplung der Aktuator/Sensoranordnung an das Formteil wird erleichtert, wenn die Montageeinheit mit einem Handgriff zum Anpressen an das Formteil versehen ist.

Wird das Koppelelement austauschbar mit der Aktuator/Sensoranordnung verbunden, so können für jeden Einsatz optimale Ankopplungsbedingungen durch Variation der Koppelelemente erreicht werden.

Im folgenden wird die Erfindung anhand von Ausführungsbeispielen im Zusammenhang mit der Zeichnung näher erläutert.

Es zeigen:
- Fig. 1: in schematischer Darstellung eine erste Ausführungsform der erfindungsgemässen Anordnung
- Fig. 2: in gleicher Darstellung eine Variante von Fig. 1
- Fig. 3: ein weiteres Beispiel für eine Aktuator/Sensor-Einheit
- Fig. 4: eine konstruktive Ausführungsform einer Aktuator/Sensoreinheit

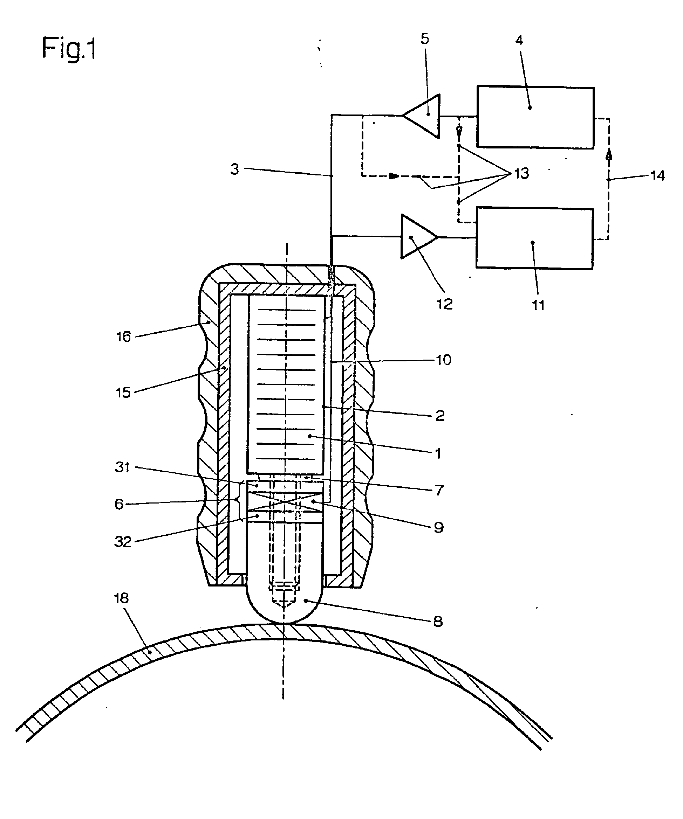

Die erfindungsgemässe Anordnung nach Fig. 1 weist eine erste Aktuator/Sensoreinheit mit einer Vielzahl von Piezokeramikscheiben 1 als Aktuator 2 auf, die zu einem säulenartigen Stapelelement zusammengefasst sind. Ihnen wird eine elektrische Anregungsspannung über eine schematisch angedeutete Leitung 3 zugeführt.

Die Anregungsspannungen werden erzeugt von einem Signalgenerator 4, der beispielsweise, wie erwähnt, als Impuls- oder als Frequenzgenerator ausgebildet sein kann. Seine Signale gelangen zunächst auf einen Leistungsverstärker 5, ehe sie dem Aktuator 2 zufliessen.

An seinem unteren Ende ist das Aktuator-Stapelelement 2, dessen Scheiben 1 in einem Gehäuse 2 vorgespannt sind, mit einem vorgespannten Kraftmesselement 6 verbunden, z.B. verschraubt. An das Element 6 ist lösbar und austauschbar ein Koppelelement 8 angesetzt. Das Kraftmesselement 6 besteht aus einem Oberteil 31 und einem Unterteil 32, zwischen denen ein Sensor 9 eingeklemmt und, z.B. durch eine Verschraubung 7, unter einer Vorspannung gehalten ist. Je nach den geforderten Ankoppelbedingungen kann das Koppelelement 8, beispielsweise für eine "harte" Ankopplung, aus Stahl oder, für eine "weiche" Ankopplung, aus einem Kunststoff, z.B. Delrin, bestehen.

Der Sensor 9 ist in dem gezeigten Beispiel eine Ringscheibe aus Piezokeramik; selbstverständlich kann er auch, wie bereits erwähnt aus mehreren Scheiben und/oder aus Quarz hergestellt sein. Über eine Leitung 10 werden die Messignale des Sensors 9 auf eine Signalanzeige 11 geführt. Die Signale gelangen dabei zunächst auf einen Ladungsverstärker 12, ehe sie, verstärkt, in dem Anzeigegerät 11 sichtbar gemacht und einer eventuellen Weiterverarbeitung zugeführt werden.

Für eine Erfassung der Aktuator-Anregung können, falls erforderlich, die Signale des Generators 4, wahlweise vor oder nach dem Verstärker 5 abgezweigt und über Signalleitungen 13 ebenfalls in das Anzeigegerät 11 eingespeist werden. Bei einer Abweichung der Anregung von ihrer Sollform und/oder Amplitude ist es möglich, die Abweichungen über Leitungen 14 zu korrigieren.

Die eigentliche Aktuator/Sensoreinheit 2, 6, 8 ist umschlossen von einem, vorzugsweise zylindrischen, Grundgehäuse 15, das je nach Anwendungsfall aussen mit einem Handgriff 16 versehen oder in einen nicht gezeigten Roboterarm eingespannt sein kann. Für eine Prüfung eines Formteils 18 wird die Einheit 2, 6, 8 mit ihrem Gehäuse 15 auf das Teil 18 gepresst, dessen Eigenschaften ermittelt werden sollen, wobei, wie bereits ausgeführt, eine Aktuatoranregung erst nach Überschreiten eines Schwellenwertes für die Anpresskraft, beispielsweise vom Anzeigegerät 11 über die Leitung 14, ausgelöst wird.

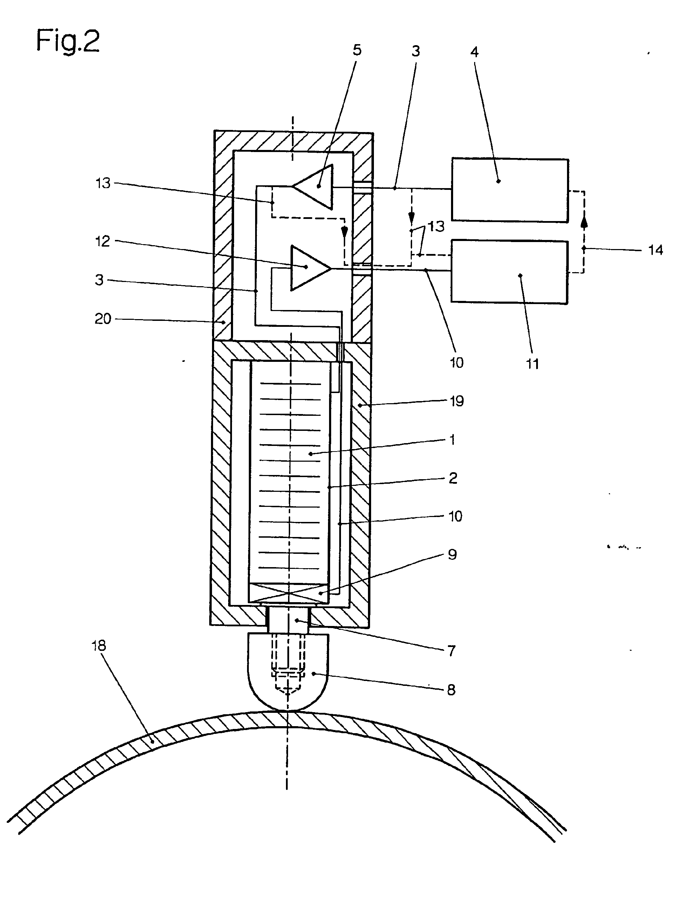

Die Anordnung nach Fig. 2 unterscheidet sich nur in Details von dem vorstehenden Beispiel. Bei ihr ist der Sensor 9 nicht in einem separaten Kraftmesselement angeordnet, sondern als eine oder mehrere Scheiben in das Stapelelement des Aktuators 2 integriert. Weiterhin sind die Verstärker 5 und 12 im Grundgehäuse der Einheit 2, 6, 8 untergebracht, das daher in zwei Teilgehäuse 19 und 20 unterteilt ist. Schliesslich ist der Handgriff 16 entfallen, so dass das Grundgehäuse 19, 20 in der gezeigten Form in einen nicht dargestellten Roboter eingesetzt werden kann.

In beiden bisher gezeigten Aktuator/Sensoreinheiten 2, 6, 8 sind Aktuator 2 und Sensor 9 mechanisch in Reihe hintereinander angeordnet, wobei es von untergeordneter Bedeutung ist, ob der Aktuator 2 oder der Sensor 9 näher zum Formteil 18 liegen.

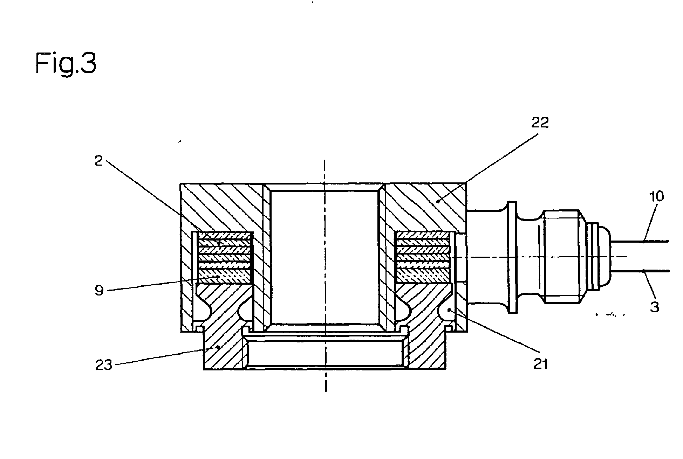

Die Reihenanordnung ist auch bei der Konstruktion nach Fig. 3 gewählt, bei der der Aktuator 2 und der Sensor 9 im Ringraum 21 eines topfartigen, mit einem Innengewinde versehenen, Gehäuse 22 untergebracht sind. Der Ringraum 21 ist nach unten offen und von einem, ebenfalls ringförmigen, Vorspannelement 23 abgeschlossen. Dieses Vorspannelement 23 besitzt ein Innengewinde zur Montage eines nicht gezeigten Koppelelementes. Mit Hilfe einer Schraube, die das Innengewinde des Gehäuses 22 durchsetzt, kann die Einheit 2, 9, 22, 23 oben an eine nicht gezeigte Haltevorrichtung montiert und über ein Koppelelement auf ein Formteil gepresst werden.

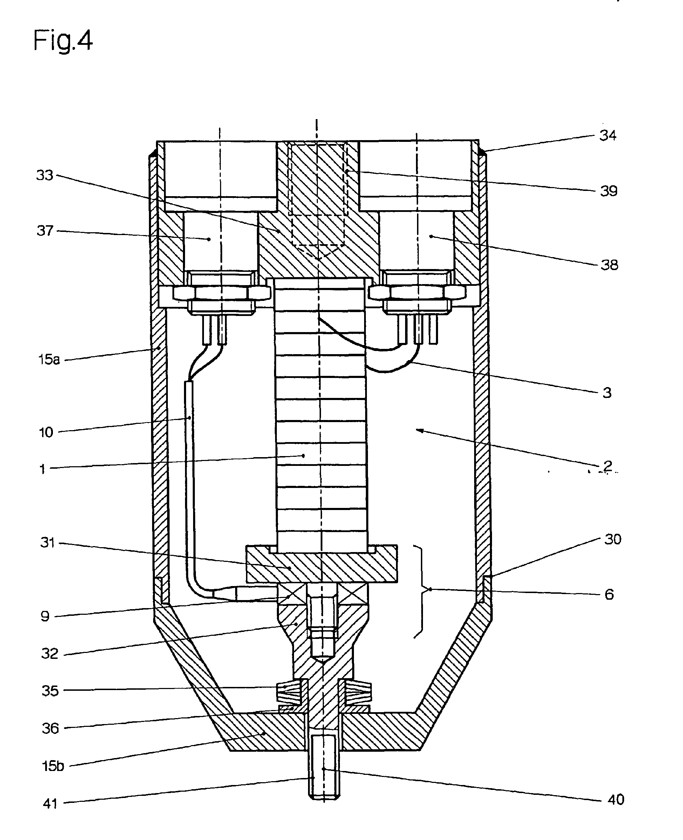

Bei der Konstruktion nach Fig. 4 sind der Sensor 9 des Messelementes 6 und der Aktuator 2 mit unterschiedlichen Vorspannungen belastet. Aktuator 2 und Sensor 9 sind gemeinsam in dem rohrförmigen Gehäuse 15 angeordnet, das aus Montagegründen in zwei miteinander bei 30 verschweisste Teile 15a und 15b unterteilt ist.

Der Sensor 9 des Messelementes 6 ist zwischen einer Vorspannschraube 31 und einer Vorspannmutter 32 eingespannt. Er weist eine höhere Vorspannung auf als der Stapel der Piezoscheiben 1 des Aktuators 2, dessen Scheiben 1 zwischen der Vorspannschraube 31 des Messelementes 6 und einem Anschlussteil 33 eingeklemmt und zusätzlich mit diesen Elementen verklebt sind.

Die Vorspannung des Stapels der Piezoscheiben 1 wird erzeugt von einer oder mehreren Tellerfedern 35, die ihrerseits über eine Dichtung 36 im Gehäuseteil 15b gelagert sind. Für den Sensor 9 addiert sich in diesem Ausführungsbeispiel zu seiner eigenen separaten Vorspannung diejenige der Tellerfeder 35.

Das Widerlager für die Kraft der Tellerfeder 35 bildet eine Schweissverbindung 34 zwischen dem Gehäuseteil 15a und dem Anschlussteil 33. Dieses dient zur Aufnahme von elektrischen und mechanischen Anschlüssen der Aktuator/Sensoreinheit. In ihm sind daher zwei Steckerbuchsen 37 und 38 mit unterschiedlicher Polzahl und ein Muttergewinde 39 vorgesehen.

Die Vorspannmutter 32 des Messelementes 6 weist eine bolzenartige Verlängerung 40 auf, die das Gehäuseteil 15b durchsetzt und aussen ein Gewinde 41 trägt; auf dieses sind austauschbare Koppelelemente 8 (Fig. 1) aufschraubbar.

Bei vergleichenden Prüfverfahren für die Eigenschaften von Formteilen mit Hilfe ihres dynamischen Verhaltens gegenüber akustischen Schwingungen gewährleistet die erfindungsgemässe Anordnung zum einen eine konstante Anregung des piezoelektrischen Aktuators für die akustischen Schwingungen und zum zweiten eine konstante Anpresskraft bei der Ankopplung der Anordnung an den Prüfling, so dass Änderungen in den Schwingungsspektren der in den Prüfling induzierten Schwingungen, die von dem in die Anordnung integrierten elektromechanischen Sensor registriert werden, eindeutig dem Material des untersuchten Formteils und seinen geänderten Eigenschaften zugeordnet werden können.

## Patentansprüche

1. Anordnung für die Materialprüfung von Formteilen zur Erkennung von Materialfehlern und/oder -eigenschaften, bei welcher Prüfung das Frequenzspektrum mechanischer Anregungsschwingungen eines zu prüfenden Formteiles (18) mit dem Frequenzspektrum eines gleichartigen Formteils mit bekannten Eigenschaften als Referenzspektrum verglichen wird, umfassend
- einen Aktuator (2), einen elektromechanischen Sensor (9) und ein Koppelelement (8, 32), die zu einer Montageeinheit vereinigt sind, ferner
- Mittel zum Erfassen von Form und Amplitude der Aktuatoranregung, und schliesslich
- einen elektronischen Ladungsverstärker (12) mit Anzeigegerät (11), mit denen mindestens die vom Sensor gemessenen, mechanischen Anregungsschwingungen des Aktuators (2) erfasst werden können,
**dadurch gekennzeichnet,**
**dass** der Aktuator (2) ein piezoelektrischer Aktuator ist, sowie dass die Anordnung ferner einen Signalgenerator (4) umfasst, der zur Aktuatoranregung Einzelimpulse oder über einen gewissen Bereich frequenzvariable Schwingungen konstanter Form und Amplitude erzeugen kann, sowie
**dass** Mittel (9, 11) vorgesehen sind, durch welche der Aktuator erst nach Überschreiten eines Schwellenwertes für eine Anpresskraft (2, 6, 8) zwischen Koppelelement (8) und Formteil (18) auslösbar ist, wobei die Anpresskraft durch den elektromechanischen Sensor (9) ermittelbar ist.

2. Anordnung nach Anspruch 1, **dadurch gekennzeichnet, dass** der Aktuator (2) und der Sensor (9) mechanisch in Serie angeordnet sind.

3. Anordnung nach einem der Ansprüche 1 oder 2, **dadurch gekennzeichnet, dass** der Sensor (9) ein Kraftsensor ist.

4. Anordnung nach einem der Ansprüche 1 bis 3, **dadurch gekennzeichnet, dass** der Aktuator (2) und der Sensor (9) aus Piezokeramikscheiben bestehen.

5. Anordnung nach einem der Ansprüche 1 bis 3, **dadurch gekennzeichnet, dass** der Sensor (9) aus Piezokeramik- und aus Quarzkristallscheiben besteht.

6. Anordnung nach Anspruch 4, **dadurch gekennzeichnet, dass** der Aktuator (2) ein Stapelelement aus einer Vielzahl von Piezokeramikscheiben (1) ist.

7. Anordnung nach einem der Ansprüche 4 bis 6, **dadurch gekennzeichnet, dass** die Aktuator- und die Sensorscheiben als Ringscheiben ausgebildet sind.

8. Anordnung nach einem der vorhergehenden Ansprüche, **dadurch gekennzeichnet, dass** die Montageeinheit (2, 6, 8) mit einem Handgriff (16) zum Anpressen an das Formteil (18) versehen ist.

9. Anordnung nach einem der vorhergehenden Ansprüche, **dadurch gekennzeichnet, dass** das Koppelelement (8, 32) des Aktuators (2) austauschbar ist.

10. Anordnung nach einem der vorhergehenden Ansprüche, **dadurch gekennzeichnet, dass** der Sensor (9) und der Aktuator (2) von einander verschiedene Vorspannkräfte aufweisen.

11. Anordnung nach Anspruch 10, **dadurch gekennzeichnet, dass** der separat vorgespannte Sensor (9) zusätzlich mit der Vorspannkraft für den Aktuator beaufschlagt ist.

## Claims

1. An assembly for material testing to detect material defects and/or properties wherein during said testing the spectrum of frequencies of mechanical excitation oscillations of a formed part (18) to be tested is compared to the spectrum of frequencies of a similar formed part having known properties serving as the reference spectrum comprising
- an actuator (2), an electromechanical sensor (9), and a coupling element (8, 32) assembled to form a mounting unit, further comprising
- means for detecting the form and amplitude of the actuator excitation, and eventually
- an electronic charge amplifier (12) having a display device (11) by which at least the mechanical excitation oscillations of the actuator (2) measured by the sensor can be detected,
**characterized in that**
the actuator (2) is a piezoelectric actuator, and **in that** the assembly further comprises a signal generator (4) able to generate single pulses or oscillations of variable frequencies and of constant form and amplitude over a certain range for actuator excitation, as well as **in that** means (9, 11) are provided by which the actuator can only be actuated after a threshold value for a contact pressure force (2, 6, 8) between the coupling element (8) and the formed part (18) is exceeded wherein the contact pressure force can be detected by the electromechanical sensor (9).

2. An assembly according to claim 1 **characterized in that** said actuator (2) and said sensor (9) are arranged mechanically in series.

3. An assembly according to any of the claims 1 or 2 **characterized in that** the sensor (9) is a force sensor.

4. An assembly according to any of the claims 1 to 3 **characterized in that** the actuator (2) and the sensor (9) are made of piezo-ceramic discs.

5. An assembly according to any of the claims 1 to 3 **characterized in that** the sensor (9) is made of piezo-ceramic and quartz crystal discs.

6. An assembly according to claim 4 **characterized in that** the actuator (2) is a stacked element consisting of a plurality of piezo-ceramic discs (1).

7. An assembly according to any of the claims 4 to 6 **characterized in that** the actuator and sensor discs are formed as annular discs.

8. An assembly according to any of the preceding claims **characterized in that** the mounting unit (2, 6, 8) is provided with a grab handle (16) for pressing the formed part (18).

9. An assembly according to any of the preceding claims **characterized in that** the coupling element (8, 32) of the actuator (2) is replaceable.

10. An assembly according to any of the preceding claims **characterized in that** the sensor (9) and the actuator (2) have prestress forces different from each other.

11. An assembly according to claim 10 **characterized in that** the separately prestressed sensor (9) is additionally submitted to the prestress force for the actuator.

## Revendications

1. Un dispositif de contrôle de matériau des pièces moulées pour la détection des défauts et/ou caractéristiques de matière, contrôle dans lequel on compare le spectre de fréquences des vibrations d'excitation mécaniques d'une pièce moulée (18) à tester avec le spectre de fréquences d'une pièce moulée similaire ayant des caractéristiques connues servant comme spectre de référence ledit dispositif comprenant
- un actuateur (2), un senseur électromécanique (9) et un élément de couplage (8, 32) assemblés pour former une unité de montage, en outre comprenant
- un dispositif à détecter la forme et l'amplitude de l'excitation du actuateur et finalement
- un amplificateur des charges électronique (12) ayant un dispositif d'affichage (11) par lequel au moins les vibrations d'excitation mécaniques du actuateur (2) mesurées par le senseur peuvent être détectées,
**caractérisé en ce que**
l'actuateur (2) est un actuateur piézoélectrique, et **en ce que** le dispositif comprend en outre un générateur de signaux (4) qui peut générer des impulsions individuelles ou sur une certaine gamme des vibrations de fréquences variables de forme et amplitude constantes pour exciter l'actuateur, et **en ce qu'**un dispositif (9, 11) est prévu en raison duquel l'actuateur ne peut être déclenché qu'un valeur seuil pour une force de pression (2, 6, 8) entre l'élément de couplage (8) et la pièce moulée (18) soit dépassé, la force de pression pouvant être détectée par le senseur électromécanique (9).

2. Un dispositif selon la revendication 1 **caractérisé en ce que** ledit actuateur (2) et ledit senseur (9) sont arrangés mécaniquement en série.

3. Un dispositif selon une des revendications 1 ou 2 **caractérisé en ce que** ledit senseur (9) est un senseur de force.

4. Un dispositif selon une des revendications 1 à 3 **caractérisé en ce que** ledit actuateur (2) et ledit senseur (9) sont fabriqués des disques piézocéramiques.

5. Un dispositif selon une des revendications 1 à 3 **caractérisé en ce que** ledit senseur (9) est fabriqué des disques piézocéramiques est de cristal de quartz.

6. Un dispositif selon la revendication 4 **caractérisé en ce que** ledit actuateur (2) est un élément empilé consistant d'une pluralité de disques piézocéramiques (1).

7. Un dispositif selon une des revendications 4 à 6 **caractérisé en ce que** ledit actuateur et ledit senseur ont la forme des disques annulaires.

8. Un dispositif selon une des revendications précédentes **caractérisé en ce que** ladite unité de montage (2, 6, 8) est pourvue d'une poignée (16) pour presser la pièce moulée (18).

9. Un dispositif selon une des revendications précédentes **caractérisé en ce que** ledit élément de couplage (8, 32) du actuateur (2) est échangeable.

10. Un dispositif selon une des revendications précédentes **caractérise en ce que** ledit senseur (9) et ledit actuateur (2) ont des forces de prétension différentes l'une de l'autre.

11. Un dispositif selon la revendication 10 **caractérisé en ce que** ledit senseur (9) séparément prétendu est encore soumis à la force de prétension pour l'actuateur.
